# EUROPÄISCHE PATENTSCHRIFT

(11) **EP 2 692 021 B1**
(45) Veröffentlichungstag und Bekanntmachung des Hinweises auf die Patenterteilung: **12.10.2016**
(21) Anmeldenummer: 12715870.7
(22) Anmeldetag: 27.03.2012
(51) Int. Cl.: H01R 9/26, H05K 7/14, H01R 13/447

(54) **AUFLAGEBOCK FÜR SCHIRMKLEMMEN**
SUPPORT FRAME FOR SHIELDING TERMINAL
CADRE DE SUPPORT POUR BORNE DE BLINDAGE

(30) Priorität: 31.03.2011 DE 102011001715
(43) Veröffentlichungstag der Anmeldung: 05.02.2014
(73) Patentinhaber: Phoenix Contact GmbH & Co. KG, 32825 Blomberg (DE)
(72) Erfinder: EISERT, Klaus, 32825 Blomberg (DE)
(74) Vertreter: Michalski Hüttermann & Partner Patentanwälte mbB
(86) Internationale Anmeldenummer: PCT/EP2012/055408
(87) Internationale Veröffentlichungsnummer: WO 2012/130843

(56) Entgegenhaltungen:
- EP-A1- 0 443 056
- EP-A2- 1 195 851
- DE-U1- 7 822 790
- DE-U1- 9 201 410
- DE-U1- 9 315 475
- FR-A1- 2 358 757

## Beschreibung

Die Erfindung betrifft einen Auflagebock für Schirmklemmen, mit einem Grundkörper, wobei der Grundkörper eine Aufnahmeeinrichtung für eine Sammelschiene und eine Fixiereinrichtung zur Fixierung der Sammelschiene in der Aufnahmeeinrichtung aufweist.

Auflageböcke, aus dem Stand der Technik auch als Haltevorrichtung für Sammelschienen bekannt, dienen zur Montage von Schirmklemmen an Montageschienen, beispielsweise in Schaltschränken, so dass mittels der Schirmklemmen Kabel an einer an dem Auflagebock vorgesehen Sammelschiene fixiert werden können, wobei die Kabel, zugentlastet durch die Schirmklemmen, auf einer Anschluss- und/oder Verbindungsklemme, welche auf der Montageschiene aufgerastet ist, angelegt bzw. mit der Anschluss- und/oder Verbindungsklemme verbunden werden können. Neben der Zugentlastung können durch einen leitend ausgeführten Auflagebock auch eine EMV-gerechte Verdrahtung der Kabel dadurch erreicht werden, dass die Kabelschirme der Kabel über die leitend ausgeführten Schirmklemmen, die Sammelschiene und den Auflagebock mit der Montageschiene elektrisch leitend verbunden sind, so dass im Falle einer geerdeten Montageschiene ebenfalls eine Erdung für die Kabelschirme bereitgestellt wird.

Die aus dem Stand der Technik bekannten Auflageböcke sind einerseits nur zur Verwendung mit einer bestimmten Art bzw. Größe von Anschluss- und/oder Verbindungsklemmen ausgelegt oder hinsichtlich unterschiedlich großer Anschluss- und/oder Verbindungsklemmen höhenverstellbar derart ausgestaltet, dass die zur Montage der Schirmklemmen vorgesehene Sammelschiene in variablem Abstand und Höhe von Auflagebock für Schirmklemmen

Die Erfindung betrifft einen Auflagebock für Schirmklemmen, mit einem Grundkörper, wobei der Grundkörper eine Aufnahmeeinrichtung für eine Sammelschiene und eine Fixiereinrichtung zur Fixierung der Sammelschiene in der Aufnahmeeinrichtung aufweist.

Auflageböcke, aus dem Stand der Technik auch als Haltevorrichtung für Sammelschienen bekannt, dienen zur Montage von Schirmklemmen an Montageschienen, beispielsweise in Schaltschränken, so dass mittels der Schirmklemmen Kabel an einer an dem Auflagebock vorgesehen Sammelschiene fixiert werden können, wobei die Kabel, zugentlastet durch die Schirmklemmen, auf einer Anschlussund/oder Verbindungsklemme, welche auf der Montageschiene aufgerastet ist, angelegt bzw. mit der Anschluss- und/oder Verbindungsklemme verbunden werden können. Neben der Zugentlastung können durch einen leitend ausgeführten Auflagebock auch eine EMV-gerechte Verdrahtung der Kabel dadurch erreicht werden, dass die Kabelschirme der Kabel über die leitend ausgeführten Schirmklemmen, die Sammelschiene und den Auflagebock mit der Montageschiene elektrisch leitend verbunden sind, so dass im Falle einer geerdeten Montageschiene ebenfalls eine Erdung für die Kabelschirme bereitgestellt wird.

DE 92 01 410 beschreibt eine Reihenklemme zum Aufreihen auf einer Tragschiene, in der Bauweise eines Tragstücks oder einer Tragklemme für Stromschienen, wozu die Reihenklemme Haltearme für eine Stromschiene aufweist, wobei bei einer von oben einlegbaren Stromschiene zumindest ein Teil der Haltearme derart abklappbar ausgeführt ist, dass die Klemme ohne die Stromschiene zu entfernen von einer Tragschiene abzunehmen ist.

EP 0 443 056 beschreibt ein System aus Reihenklemmen, die jeweils an einem Haltefuß ihres Gehäuses auf Tragschienen anbringbar sind, wobei zumindest einige Reihenklemmen oder Tragstücke mit dem Profil von Reihenklemmen mittels seitlicher Haltearme eine Stromschiene aufnehmen können.

Die aus dem Stand der Technik bekannten Auflageböcke sind einerseits nur zur Verwendung mit einer bestimmten Art bzw. Größe von Anschluss- und/oder Verbindungsklemmen ausgelegt oder hinsichtlich unterschiedlich großer Anschluss- und/oder Verbindungsklemmen höhenverstellbar derart ausgestaltet, dass die zur Montage der Schirmklemmen vorgesehene Sammelschiene in variablem Abstand und Höhe von der Montageschiene fixierbar ist. Letztgenannte Konstruktionen sind allerdings aufgrund der komplizierten Mechanik vielfach wenig stabil und/oder benötigen sehr viel Platz, welcher vor allem beim Einsatz in Schaltschränken in der Regel nur in sehr geringem Maß zur Verfügung steht.

Der Erfindung liegt daher die Aufgabe zu Grunde, einen Auflagebock für Schirmklemmen bereitzustellen, der auch bei sehr beengten Platzverhältnissen für Anschluss- und/oder Verbindungsklemmen unterschiedlichster Größen universell einsetzbar ist und dabei eine stabile Fixierung der Schirmklemmen über den Auflagebock an der Montageschiene ermöglicht.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß wird die Aufgabe durch einen Auflagebock für Schirmklemmen gelöst, wobei der Auflagebock einen Grundkörper aufweist, der Grundkörper eine Aufnahmeeinrichtung für eine Sammelschiene und eine Fixiereinrichtung zur Fixierung der Sammelschiene in der Aufnahmeeinrichtung aufweist, der Grundköper auf eine Montageschiene derart aufrastbar ist, dass, wenn die Sammelschiene mittels der Fixiereinrichtung in der Aufnahmeeinrichtung fixiert ist, die Längserstreckung der Montageschiene parallel zu der Längserstreckung der Sammelschiene ist, die Aufnahmeeinrichtung derart ausgestaltet ist, dass die Sammelschiene in einer beliebigen um ihre Längsachse gedrehten Winkelstellung in der Aufnahmeeinrichtung aufnehmbar ist und dass, wenn die Sammelschiene in der Aufnahmeeinrichtung aufgenommen ist, die Sammelschiene in der Winkelstellung wenigstens teilweise an der Aufnahmeeinrichtung anliegt, und die Fixiereinrichtung derart ausgestaltet ist, dass die Sammelschiene in der Winkelstellung fixierbar ist.

Erfindungsgemäß ist also vorgesehen, dass, im Gegensatz zum Stand der Technik, die Sammelschiene in einer beliebigen um ihre Längsachse gedrehten Winkelstellung an dem Grundkörper fixierbar ist, so dass dadurch mittels aus dem Stand der Technik bekannter Schirmklemmen Kabel in einem durch die Neigung der Sammelschiene vorgegebenen Winkelstellung an einer auf der Montageschiene vorgesehenen Anschluss- und/oder Verbindungsklemme heranführbar bzw. mit der Anschluss- und/oder Verbindungsklemme verbindbar sind. Dadurch lässt sich der erfindungsgemäße Auflagebock in besonders universeller Weise für eine Vielzahl Anschluss- und/oder Verbindungsklemmen unterschiedlicher Höhen und Größen, auch unter äußerst beengten Platzverhältnissen, einsetzen. Mit anderen Worten erlaubt der erfindungsgemäße Auflagebock, im Gegensatz zum Stand der Technik, wo die Sammelschiene nur in einer einzigen Position an dem Grundköper fixiert war, also die Sammelschiene und die Montageschiene in ihren Quererstreckungen einen fixen Winkel zueinander hatten, ein flexibles Heranführen des auf der Sammelschiene befestigten Kabels durch unterschiedliche Winkelstellungen der Sammelschiene relativ zu der Montageschiene und in Bezug auf die "Höhe" der Anschluss- und/oder Verbindungsklemme.

Der Grundköper des Auflagebocks kann beliebig ausgestaltet sein, beispielsweise aus einem Kunststoff und/oder aus einem Metall ausgeführt sein. Ebenfalls kann die Aufnahmeeinrichtung und die Fixiereinrichtung als beliebige aus dem Stand der Technik bekannte Mittel zur Aufnehmen bzw. Fixierung der Sammelschiene ausgebildet sein. Eben solches gilt auch für die Sammelschiene und die Montageschiene, welche jeweils als beliebige aus dem Stand der Technik bekannte Schienen, vorzugsweise zur Verwendung in einem Schaltschrank, ausgeführt sein können.

Vorzugsweise ist die Aufnahmeeinrichtung in dem Bereich, in dem die Sammelschiene wenigstens teilweise an der Aufnahmeeinrichtung anliegt, derart ausgebildet, dass die Aufnahmeeinrichtung beispielsweise ein gebogenes, rundes oder ovales Profil aufweist, so dass die Sammelschiene im Tangentialpunkt der gebogenen Oberfläche der Aufnahmeeinrichtung vorzugsweise unmittelbar an der Aufnahmeeinrichtung anliegt. Ebenfalls kann die Aufnahmeeinrichtung ein Profil aufweisen, welches jeweils abschnittsweise gerade verläuft, wobei das Profil zwischen zwei geraden Erstreckungen jeweils um einen Winkel, wie beispielsweise 10° oder 30°, abknickt, so dass verschiedene gerade Erstreckungen unterschiedlicher Winkelstellungen, relativ zur Montageschiene, ausgebildet werden.

In jedem Fall ist gemäß der Erfindung vorgesehen, dass die Aufnahmeeinrichtung in dem Bereich, in dem die Sammelschiene wenigstens teilweise an die Aufnahmeeinrichtung anlegbar ist, derart ausgestaltet ist, dass die Sammelschiene im an die Aufnahmeeinrichtung angelegten Zustand hinsichtlich ihrer Quererstreckung einen zur Quererstreckung der Montageschiene beliebigen Winkel aufweisen kann und in dem konkreten Winkel durch die Fixiereinrichtung an der Halteeinrichtung fixierbar ist.

Nach einer weiteren bevorzugten Ausführungsform ist vorgesehen, dass der Grundkörper einen zweite Aufnahmeeinrichtung für eine zweite Sammelschiene und eine zweite Fixiereinrichtung zur Fixierung der zweiten Sammelschiene in der zweiten Aufnahmeeinrichtung aufweist, und die Aufnahmeeinrichtung gegenüberliegend zu der zweiten Aufnahmeeinrichtung derart angeordnet ist, dass, wenn der Grundkörper auf die Montageschiene aufgerastet ist, der Grundkörper zwischen der Aufnahmeeinrichtung und der zweiten Aufnahmeeinrichtung angeordnet ist. Gemäß dieser Ausführungsform ist also vorgesehen, dass der Auflagebock als "doppelter Auflagebock" ausgestaltet ist, somit also das Heranführen und Fixieren eines Kabels von beiden Seiten an die Anschluss- und/oder Verbindungsklemme ermöglicht. Im Zusammenhang mit dieser Ausführungsform sei darauf hingewiesen, dass alle im Weiteren beschriebenen Ausführungsformen ebenfalls als derartig "doppelter Auflagebock" ausgestaltet sein können, auch wenn dies nicht explizit erwähnt ist.

Nach einer anderen bevorzugten Ausführungsform der Erfindung ist vorgesehen, dass der Grundkörper eine einzige Aufnahmeeinrichtung und eine einzige dazu korrespondierende Fixiereinrichtung aufweist. Demnach ist also bei dieser bevorzugten Ausführungsform vorgesehen, dass der Auflagebock derart ausgestaltet ist, dass, im Gegensatz zum Stand der Technik, nur eine einzige Aufnahmeeinrichtung bzw. eine einzige Fixiereinrichtung vorgesehen sind, wobei die Sammelschiene in diese einzige Aufnahmeeinrichtung bzw. mittels dieser einzigen Fixiereinrichtung in einer beliebigen um ihre Längsachse gedrehten Winkelstellung aufnehmbar bzw. fixierbar ist. Dadurch lässt sich der erfindungsgemäße Auflagebock besonders universell mit einer Vielzahl unterschiedlicher Anschluss- und/oder Verbindungsklemmen unterschiedlichster Größen bzw. Höhen einsetzen.

Grundsätzlich kann, wie bereits ausführt, der Grundkörper beliebig ausgestaltet sein. Gemäß einem besonders bevorzugten Ausführungsbeispiel der Erfindung ist jedoch vorgesehen, dass der Grundkörper einen Metalleinleger aufweist, wobei der Metalleinleger derart ausgestaltet ist, dass, wenn die Sammelschiene in der Aufnahmeeinrichtung aufgenommen ist, die Sammelschiene in der Winkelstellung wenigstens teilweise an dem Metalleinleger anliegt. Dadurch, dass der Einleger aus einem Metall ausführt ist, kann die Sammelschiene wesentlich "unverdrehbarer" an dem Metalleinleger angelegt werden, da Metall, beispielsweise im Vergleich zum einem aus einem Kunststoff ausgeführten Grundkörper, wesentlich verwindungssteifer ist.

Nach einem besonders bevorzugten Ausführungsbeispiel der Erfindung ist vorgesehen, dass die Aufnahmeeinrichtung und die Fixiereinrichtung derart ausgestaltet sind, dass die Sammelschiene in drei wählbaren um ihre Längsachse gedrehten Winkelstellungen in der Aufnahmeeinrichtung aufnehmbar ist uns die Sammelschiene in den drei Winkelstellungen fixierbar ist. Demnach ist also vorgesehen, dass die Sammelschiene in drei dedizierten Winkelstellungen in dem Auflagebock, und damit relativ zu der Montageschiene, fixierbar ist. Beispielsweise lässt sich für eine derartige Ausgestaltung die Aufnahmeeinrichtung derart ausgestalten, dass der Bereich in dem die Sammelschiene wenigstens teilweise an der Aufnahmeeinrichtung anlegbar ist, eine Kontur derart aufweist, dass drei im wesentlichen gerade verlaufende "Ränder" der Kontur vorgesehen sind, die durch "Knicke" in der Kontur unterbrochen sind. In diesem Zusammenhang ist ganz besonders bevorzugt, dass die Aufnahmeeinrichtung und die Fixiereinrichtung derart ausgestaltet sind, dass, wenn der Grundkörper auf die Montageschiene aufgerastest ist und die Sammelschiene in der Aufnahmeeinrichtung fixiert ist, die jeweiligen Quererstreckungen der Sammelschiene und der Montageschiene in einer ersten Winkelstellung einen Winkel von 0°, in einer zweiten Winkelstellung einen Winkel von 45° und in einer dritten Winkelstellung einen Winkel von 90° zueinander ausbilden. Durch eine derartige Ausgestaltung lässt sich beispielsweise ein Auflagebock herstellen, der für wenigstens drei Verbindungsklemmen unterschiedlicher Größe das Heranführen des Kabels an die Verbindungsklemme in besonders einfacher Weise durch Anlegen der Sammelschiene an die Aufnahmeeinrichtung in der gewünschten Winkelstellung und Fixierung der Sammelschiene in der gewünschten Winkelstellung ermöglicht.

Nach einer weiteren bevorzugten Ausführungsform der Erfindung ist vorgehen, dass die Aufnahmeeinrichtung und/oder der Metalleinleger in jeder Winkelstellung zwei Rastmittel zum Verrasten der Sammelschiene aufweisen. Vorzugsweise sind die zwei Rastmittel jeweils derart angeordnet, dass die Sammelschiene zwischen den Rastmitteln verrastbar ist. Ganz besonders bevorzugt sind die Rastmittel als Ablegekante und/oder als Metallklemmung an dem Metalleinleger ausgestaltet. Durch derartige Ausgestaltung lässt sich bereits durch das Einlegen der Sammelschiene in die Aufnahmeeinrichtung eine erste Fixierung der Sammelschiene an der Aufnahmeeinrichtung erreichen, wobei die Sammelschiene dann in einem zweiten Schritt durch die Fixiereinrichtung endgültig fixierbar ist.

Grundsätzlich können die Aufnahmeeinrichtung und die Fixiereinrichtung beliebig an dem Grundkörper angeordnet sein. Gemäß einer besonders bevorzugten Ausführungsform ist jedoch vorgesehen, dass, wenn der Grundkörper auf die Montageschiene aufgerastet ist, die Aufnahmeeinrichtung und die Fixiereinrichtung an dem Grundköper in Quererstreckung der Montageschiene beabstandet von der Montageschiene angeordnet sind. Ebenfalls ist bevorzugt, dass, wenn der Grundkörper auf die Montageschiene aufgerastet ist, die Aufnahmeeinrichtung und die Fixiereinrichtung an dem Grundkörper senkrecht zur Quererstreckung der Montageschiene beabstandet von der Montageschiene angeordnet sind.

Weiterhin ist bevorzugt, dass die Fixiereinrichtung, welche grundsätzlich als beliebige aus dem Stand der Technik bekannte Fixiereinrichtung ausgestaltet sein kann, als handbetätigbarer Klippverschluss ausgestaltet ist. Dabei kann der Klippverschluss an einer seiner Seiten an der Aufnahmeeinrichtung befestigt sein, beispielsweise verschwenkbar befestigt sein, und zum Fixieren der Sammelschiene in der Aufnahmeeinrichtung derart hin zur Sammelschiene verschwenkt werden, dass die Fixiereinrichtung über ein Rastmittel mittels der Aufnahmeeinrichtung zum Fixieren der Sammelschiene in der Aufnahmeeinrichtung verrastet. Gerade dadurch, dass der Klippverschluss handbetätigbar ist, lässt sich die Sammelschiene in besonders einfacher Weise ohne Benutzung eines speziellen Werkzeugs an der Aufnahmeeinrichtung fixieren.

Nach einer weiteren bevorzugten Ausführungsform der Erfindung ist vorgesehen, dass der Grundkörper derart ausgestaltet ist, dass, wenn der Grundkörper auf die Montageschiene aufgerastet ist und die Sammelschiene in der Aufnahmeeinrichtung aufgenommen ist, eine elektrische Verbindung zwischen der Montageschiene und der Sammelschiene hergestellt ist. Somit lässt sich unter der Annahme, dass die Montageschiene geerdet ist, in besonders einfacher Weise die Kabelschirmung eines an der Sammelschiene befestigten Kabels erden, so dass eine EMV-gerechte Verdrahtung in besonders einfacher Weise realisierbar wird. In einer alternativen Ausgestaltung ist bevorzugt, dass der Grundkörper den Metalleinleger aufweist, allerdings zwischen der Montageschiene und der Sammelschiene keine elektrische Verbindung besteht.

Nachfolgend wird die Erfindung unter Bezugnahme auf die anliegende Zeichnung anhand bevorzugter Ausführungsformen näher erläutert.

Es zeigen
- Fig. 1: einen erfindungsgemäßen "doppelten Auflagebock" in einer Explosionsansicht gemäß einer bevorzugten Ausführungsform der Erfindung,
- Fig. 2: eine perspektivische Teilansicht des erfindungsgemäßem Auflagebocks mit einer Sammelschiene in einer ersten Winkelstellung,
- Fig. 3: eine perspektivische Teilansicht des erfindungsgemäßem Auflagebocks mit einer Sammelschiene in einer zweiten Winkelstellung,
- Fig. 4: eine perspektivische Teilansicht des erfindungsgemäßem Auflagebocks mit einer Sammelschiene in einer dritten Winkelstellung, und
- Fig. 5: die erfindungsgemäße Aufnahmeeinrichtung und Fixiereinrichtung ohne eingelegte Sammelschiene in einer schematischen Draufsicht.

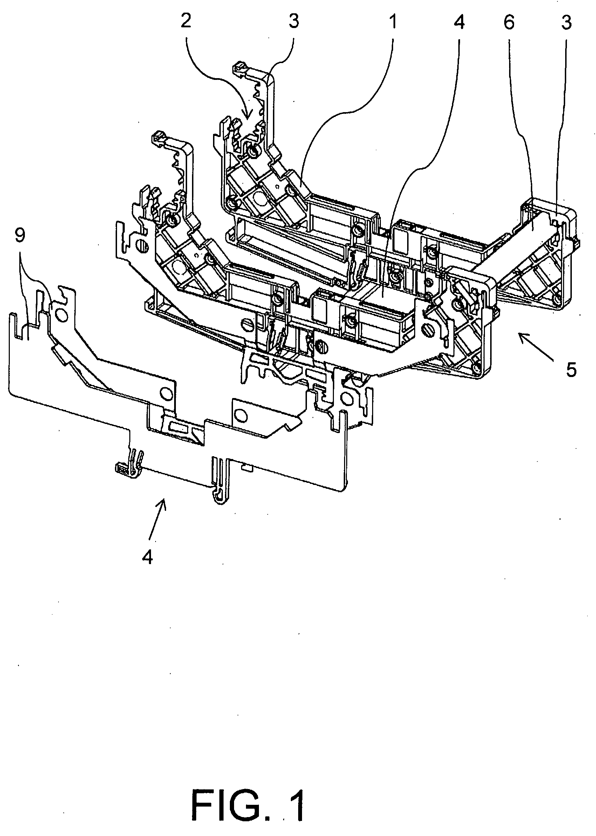

Aus Fig. 1 ist ein erfindungsgemäßer "doppelter Auflagebock" in einer Explosionsansicht ersichtlich. Der Auflagebock weist einen Grundkörper 1, eine Aufnahmeeinrichtung 2 und eine Fixiereinrichtung 3 auf, welche vorliegend einstückig aus einem Kunststoff herstellt sind.

Die Fixiereinrichtung 3 ist als handbetätigbarer Klippverschluss ausgestaltet. Der Grundkörper 1 ist auf eine Montageschiene 4, dargestellt durch Pfeil 4, aufrastbar, wobei die Montageschiene 4 als eine aus dem Stand der Technik bekannte Montageschiene 4 zur Aufnahme von elektrischen Anschluss- und/oder Verbindungsklemmen ausgeführt ist. Dabei werden vorgenannte Anschluss- und/oder Verbindungsklemmen vorzugsweise zwischen zwei Auflageböcken 1, 2, 3 angeordnet, wie durch Pfeil 5 angedeutet, wobei die vorgenannte Anschluss- und/oder Verbindungsklemmen auch auf die Montageschiene 4 aufrastbar sind. Die Aufnahmeeinrichtung 2 ist zur Aufnahme einer Sammelschiene 6 ausgestaltet, wobei die Sammelschiene 6, wenn in der Aufnahmeeinrichtung 2 eingelegt, durch die Fixiereinrichtung 3 in der konkreten um ihre Längsachse gedrehten Winkelstellung der Sammelschiene 6 in der Aufnahmeeinrichtung unverdrehbar 2 fixierbar ist.

Dazu ist erfindungsgemäß die Aufnahmeeinrichtung 2 derart ausgestaltet, dass die Sammelschiene 6 in einer beliebigen um ihre Längsachse gedrehten Winkelstellung in der Aufnahmeeinrichtung 2 derart aufnehmbar ist, dass die Sammelschiene 6 in der konkreten Winkelstellung wenigstens teilweise, angedeutet durch Pfeil 7, an der Aufnahmeeinrichtung 2 anliegt. Ebenfalls ist erfindungsgemäß die Fixiereinrichtung 3 derart ausgestaltet, dass die Fixiereinrichtung 3 die Sammelschiene 6 in der konkreten Winkelstellung in der Aufnahmeeinrichtung 2 fixiert. Mit anderen Worten ist also gemäß der Erfindung vorgesehen, dass in einer einzigen Aufnahmeeinrichtung 2 zwei und in einer einzigen dazu korrespondierenden Fixiereinrichtung 3 eine Sammelschiene 6 in einer beliebigen um ihre Längsachse gedrehten Winkelstellung fixierbar ist, beispielsweise dadurch, dass die Halteeinrichtung 2 eine der Sammelschiene 6 zugewandten Kontur aufweist, die geschwungen oder halbkreisförmig ist, so dass die Sammelschiene 6 jeweils am Tangentialpunkt 7 der halbkreisförmigen Kontur anliegend in einer beliebigen Winkelstellung um ihre Längsachse in dem Auflagebock fixierbar ist.

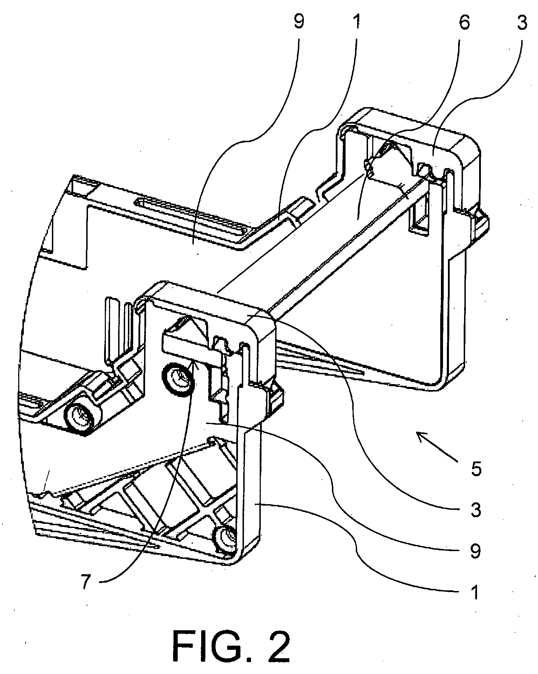

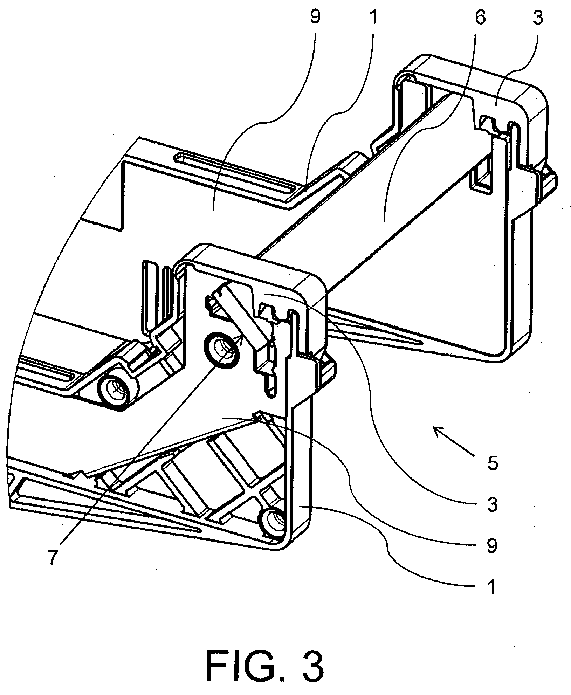

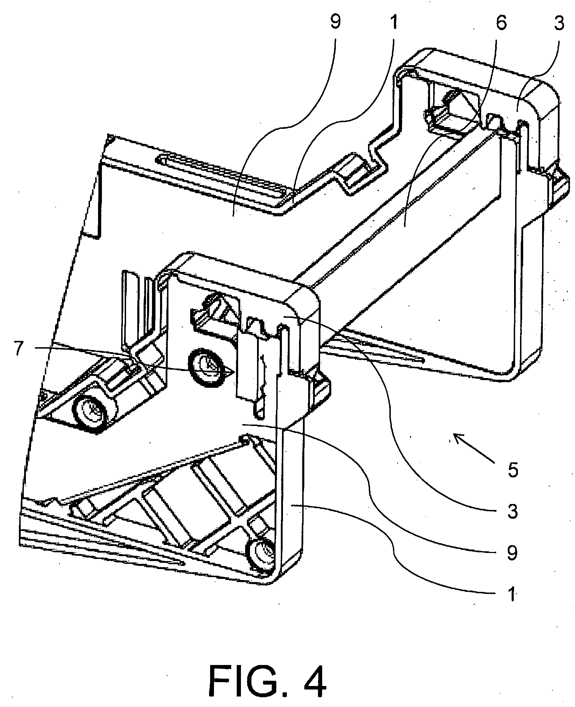

Konkret dargestellt wird dies in dem Fig. 2 bis Fig. 4, in denen die Sammelschiene 6 jeweils in drei unterschiedlichen Winkelstellungen um ihre Längsachse gedreht in der Aufnahmeeinrichtung 2 aufgenommen und durch die Fixiereinrichtung 3 fixiert ist. Dabei schließen die in den Fig. 2 bis Fig. 4 gezeigten Winkelstellungen die Winkel von 0°, 45° und 90° zwischen den Quererstreckungen der Sammelschiene 6 und der Montageschiene 4 ein. Dazu ist die Aufnahmeeinrichtung 2 derart ausgeführt, dass die Sammelschiene 6 in jeder der Winkelstellungen wenigstens teilweise an der Aufnahmeeinrichtung 2 anliegen kann, dargestellt durch Pfeil 7.

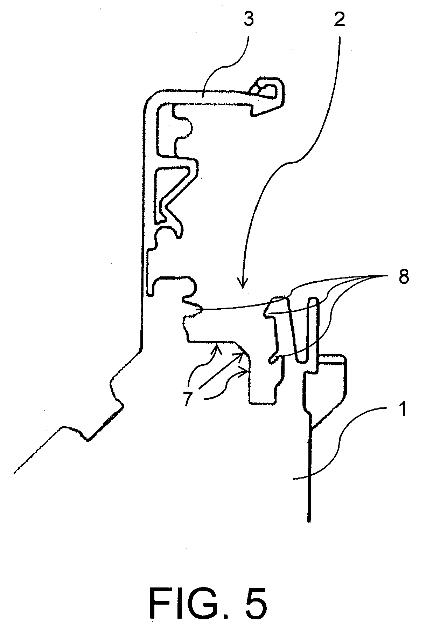

Wie aus Fig. 5 im Detail zu erkennen, weist die Aufnahmeeinrichtung 2 für jede dieser Winkelstellungen von 0°, 45° und 90° jeweils zwei Rastmittel 8 auf, welche zum Verrasten mit der Sammelschiene 6 ausgestaltet sind. Dabei sind die Rastmittel 8 vorliegend als Rastnasen, Ablegekante und Metallklemmung, wie aus Fig. 5 ersichtlich, ausgeführt. Das bedeutet, dass bereits durch Einlegen der Sammelschiene 6 in die Aufnahmeeinrichtung 2 die Sammelschiene 6 in der Aufnahmeeinrichtung 2 verrastbar ist.

Ferner ist ein Metalleinleger 9 vorgesehen, beispielsweise ersichtlich in Fig. 1, wobei der Metalleinleger 9 derart ausgestaltet ist, dass, wenn die Sammelschiene 6 in der Aufnahmeeinrichtung 2 aufgenommen ist, die Sammelschiene 6 in der konkreten Winkelstellung wenigstens teilweile an dem Metalleinleger 9 anliegt. Dabei können auch zwei Metalleinleger 9 vorgesehen sein, die jeweils an einer Außenseite des Grundkörpers 1 anliegen und so den Grundkörper 1 einfassen. Ferner kann durch die Metalleinleger 9 eine elektrisch leitende Verbindung zwischen der Sammelschiene 6 und der Montageschiene 4 erreicht werden.

**Bezugszeichenliste**

| | |
|---|---|
| Grundkörper | 1 |
| Aufnahmeeinrichtung | 2 |
| Fixiereinrichtung | 3 |
| Montageschiene | 4 |
| Zwischenraum | 5 |
| Sammelschiene | 6 |
| Anliegend symbolisiert durch Pfeil | 7 |
| Rastmittel | 8 |
| Metalleinleger | 9 |

## Patentansprüche

1. Auflagebock für Schirmklemmen, mit einem Grundkörper (1), wobei
der Grundkörper (1) eine Aufnahmeeinrichtung (2) für eine Sammelschiene (6) und eine Fixiereinrichtung (3) zur Fixierung der Sammelschiene (6) in der Aufnahmeeinrichtung (2) aufweist,
der Grundkörper (1) auf eine Montageschiene (4) derart aufrastbar ist, dass, wenn die Sammelschiene (6) mittels der Fixiereinrichtung (3) in der Aufnahmeeinrichtung (2) fixiert ist, die Längserstreckung der Montageschiene (4) parallel zu der Längserstreckung der Sammelschiene (6) ist,
die Aufnahmeeinrichtung (2) derart ausgestaltet ist, dass die Sammelschiene (6) in beliebigen, unterschiedlichen um ihre Längsachse gedrehten winkelstellungen in der Aufnahmeeinrichtung (2) aufnehmbar ist und dass, wenn die Sammelschiene (6) in der Aufnahmeeinrichtung (2) aufgenommen ist, die Sammelschiene (6) in der konkreten Winkelstellung wenigstens teilweise an der Aufnahmeeinrichtung (2) anliegt, und
die Fixiereinrichtung (3) derart ausgestaltet ist, dass die Sammelschiene (6) in der konkreten Winkelstellung fixierbar ist,

2. Auflagebock nach Anspruch 1, wobei der Grundkörper (1) eine zweite Aufnahmeeinrichtung (2) für eine zweite Sammelschiene (6) und eine zweite Fixiereinrichtung (3) zur Fixierung der zweiten Sammelschiene (6) in der zweiten Aufnahmeeinrichtung (2) aufweist, und die Aufnahmeeinrichtung (2) gegenüberliegend zu der zweiten Aufnahmeeinrichtung (2) derart angeordnet ist, dass, wenn der Grundkörper (1) auf die Montageschiene (4) aufgerastet ist, der Grundkörper (1) zwischen der Aufnahmeeinrichtung (2) und der zweiten Aufnahmeeinrichtung (2) angeordnet ist.

3. Auflagebock nach Anspruch 1, wobei der Grundkörper (1) eine einzige Aufnahmeeinrichtung (2) und eine einzige dazu korrespondierende Fixiereinrichtung (3) aufweist.

4. Auflagebock nach einem der vorhergehenden Ansprüche, mit einem Metalleinleger (9), wobei der Metalleinleger (9) derart ausgestaltet ist, dass, wenn die Sammelschiene (6) in der Aufnahmeeinrichtung (2) aufgenommen ist, die Sammelschiene (6) in der konkreten Winkelstellung wenigstens teilweise an dem Metalleinleger (9) anliegt.

5. Auflagebock nach einem der vorhergehenden Ansprüche, wobei die Aufnahmeeinrichtung (2) und die Fixiereinrichtung (3) derart ausgestaltet sind, dass die Sammelschiene (6) in drei wählbaren um ihre Längsachse gedrehten Winkelstellungen in der Aufnahmeeinrichtung (2) aufnehmbar ist und die Sammelschiene (6) in den drei Winkelstellungen fixierbar ist.

6. Auflagebock nach einem der vorhergehenden Ansprüchen, wobei die Aufnahmeeinrichtung (2) und die Fixiereinrichtung (3) derart ausgestaltet sind, dass, wenn der Grundkörper (1) auf die Montageschiene (4) aufgerastet ist und die Sammelschiene (6) in der Aufnahmeeinrichtung (2) fixiert ist, die jeweiligen Quererstreckungen der Sammelschiene (6) und der Montageschiene (4) in einer ersten Winkelstellung einen Winkel von 0°, in einer zweiten Winkelstellung einen Winkel von 45° und in einer dritten Winkelstellung einen Winkel von 90° zueinander ausbilden.

7. Auflagebock nach Anspruch 4 und 5 oder 6, wobei die Aufnahmeeinrichtung (2) und/oder der Metalleinleger (9) in jeder Winkelstellung zwei Rastmittel (8) zum Verrasten der Sammelschiene (6) aufweisen.

8. Auflagebock nach einem der vorhergehenden Ansprüche, wobei, wenn der Grundkörper (1) auf die Montageschiene (6) aufgerastet ist, die Aufnahmeeinrichtung (2) und die Fixiereinrichtung (3) an dem Grundkörper (1) in Quererstreckung der Montageschiene (4) beabstandet von der Montageschiene (4) angeordnet sind.

9. Auflagebock nach einem der vorhergehenden Ansprüche, wobei die Fixiereinrichtung (3) als handbetätigbarer Klippverschluss ausgestaltet ist.

10. Auflagebock nach einem der vorhergehenden Ansprüche, wobei der Grundkörper (1) derart ausgestaltet ist, dass, wenn der Grundkörper (1) auf die Montageschiene (4) aufgerastet ist und die Sammelschiene (6) in der Aufnahmeeinrichtung (2) aufgenommen ist, eine elektrische Verbindung zwischen der Montageschiene (4) und der Sammelschiene (6) hergestellt ist.

## Claims

1. A support stand for screening terminals, comprising a main body (1), wherein
the main body (1) comprises a receiving device (2) for a bus bar (6) and a fixing device (3) for fixing the bus bar (6) in the receiving device (2),
the main body (1) can be latched onto a mounting rail (4) in such a way that, when the bus bar (6) is fixed by a means of the fixing device (3) in the receiving device (2), the longitudinal extension of the mounting rail (4) is parallel to the longitudinal extension to the bus bar (6),
the receiving device (2) is designed in such a way that the bus bar (6) can be received in the receiving device (2) in any angular position rotated about its longitudinal axis, and in such a way that, when the bus bar (6) is received in the receiving device (2), the bus bar (6) bears at least in part against the receiving device (2) in the angular position, and
the fixing device (3) is designed in such a way that the bus bar (6) can be fixed in the angular position.

2. The support stand according to Claim 1, wherein the main body (1) comprises a second receiving device (2) for a second bus bar (6) and a second fixing device (3) for fixing the second bus bar (6) in the second receiving device (2), and the receiving device (2) is arranged opposite the second receiving device (2) in such a way that, when the main body (1) is latched onto the mounting rail (4), the main body (1) is arranged between the receiving device (2) and the second receiving device (2).

3. The support stand according to Claim 1, wherein the main body (1) comprises a single receiving device (2) and a single fixing device (3) corresponding thereto.

4. The support stand according to one of the preceding claims, comprising a metal insert (9), wherein the metal insert (9) is designed in such a way that, when the bus bar (6) is received in the receiving device (2), the bus bar (6) bears at least in part against the metal insert (9) in the angular position.

5. The support stand according to one of the preceding claims, wherein the receiving device (2) and the fixing device (3) are designed in such a way that the bus bar (6) can be received in the receiving device (2) in three selectable angular positions rotated about its longitudinal axis and the bus bar (6) can be fixed in the three angular positions.

6. The support stand according to one of the preceding claims, wherein the receiving device (2)and the fixing device (3) are designed in such a way that, when the main body (1) is latched onto the mounting rail (4) and the bus bar (6) is fixed in the receiving device (2), the respective transverse extensions of the bus bar (6) and of the mounting rail (4) form an angle to one another of 0° in a first angular position, of 45° in a second angular position an, and of 90° in a third angular position.

7. The support stand according to Claim 4 and 5 or 6, wherein the receiving device (2) and/or the metal insert (9) in each angular position has/have two detent means (8) for latching the bus bar (6).

8. The support stand according one of the preceding claims, wherein, when the main body (1) is latched onto the mounting rail (6), the receiving device (2) and the fixing device (3) on the main body (1) are distanced from the mounting rail (4) in the transverse direction of the mounting rail (4).

9. The support stand according to one of the preceding claims, wherein the fixing device (3) is designed as a manually actuatable clip closure.

10. The support stand according to one of the preceding claims, wherein the main body (1) is designed in such a way that, when the main body (1) is latched onto the mounting rail (4) and the bus bar (6) is received in the receiving device (2), an electrical connection is produced between the mounting rail (4) and the bus bar (6).

## Revendications

1. Chevalet de support pour pinces de blindage, avec un corps de base (1), dans lequel
le corps de base (1) présente un dispositif de réception (2) pour une barre omnibus (6) et un dispositif de fixation (3) pour la fixation de la barre omnibus (6) dans le dispositif de réception (2),
le corps de base (1) peut être bloqué sur un rail de montage (4) de telle manière que, lorsque la barre omnibus (6) est fixée dans le dispositif de réception (2) au moyen du dispositif de fixation (3), l'extension longitudinale du rail de montage (4) est parallèle à l'extension longitudinale de la barre omnibus (6),
le dispositif de réception (2) est conçu de telle manière que la barre omnibus (6) peut être reçue dans le dispositif de réception (2) dans des positions angulaires quelconques, diverses, en rotation autour de son axe longitudinal, et que, lorsque la barre omnibus (6) est logée dans le dispositif de réception (2), la barre omnibus (6) dans le position angulaire effective, est alignée au moins partiellement contre le dispositif de réception (2), et
le dispositif de fixation (3) est conçu de telle manière que la barre omnibus (6) peut être fixée dans la position angulaire effective.

2. Chevalet de support selon la revendication 1 dans lequel le corps de base (1) présente un deuxième dispositif de réception (2) pour une deuxième barre omnibus (6) et un deuxième dispositif de fixation (3) pour la fixation de la deuxième barre omnibus (6) dans le deuxième dispositif de réception (2), et
le dispositif de réception (2) est disposé se situant face au deuxième dispositif de réception (2) de telle manière que, lorsque le corps de base (1) est bloqué sur le rail de montage (4), le corps de base (1) est disposé entre le dispositif de réception (2) et le deuxième dispositif de réception.

3. Chevalet de support selon la revendication 1 dans lequel le corps de base (1) présente un seul dispositif de réception (2) et un seul dispositif de fixation (3) lui correspondant.

4. Chevalet de support selon l'une des revendications précédentes, avec un insert métallique (3), où l'insert métallique (9) est conçu de telle manière que, lorsque la barre omnibus (6) est logée dans le dispositif de réception (2), la barre omnibus (6), dans la position angulaire effective, est au moins partiellement alignée contre l'insert métallique (9).

5. Chevalet de support selon l'une des revendications précédentes, dans lequel le dispositif de réception (2) et le dispositif de fixation (3) sont conçus de telle manière que la barre omnibus (6) peut être logée dans trois positions angulaires au choix en rotation autour de son axe longitudinal et la barre omnibus (6) peut être fixée dans les trois positions angulaires.

6. Chevalet de support selon l'une des revendications précédentes, dans lequel le dispositif de réception (2) et le dispositif de fixation (3) sont conçus de telle manière que, lorsque le corps de base (1) est bloqué sur le rail de montage (4) et la barre omnibus (6) est fixée dans le dispositif de réception (2), les extensions transversales respectives de la barre omnibus (6) et du rail de montage (4) forment un angle de 0 ° dans une première position angulaire, un angle de 45 ° dans une deuxième position angulaire et un angle de 90 ° l'une par rapport à l'autre dans une troisième position angulaire.

7. Chevalet de support selon les revendications 4 et 5, ou 6, dans lequel le dispositif de réception (2) et/ou l'insert métallique (9) présentent deux moyens de blocage (8) dans chaque position angulaire pour le blocage de la barre omnibus (6).

8. Chevalet de support selon l'une des revendications précédentes, dans lequel, lorsque le corps de base (1) est bloqué sur le rail de montage (6), le dispositif de réception (2) et le dispositif de fixation (3) sont disposés sur le corps de base (1), sur l'extension transversale du rail de montage (4), espacés par rapport au rail de montage (4).

9. Chevalet de support selon l'une des revendications précédentes, dans lequel le dispositif de fixation (3) est conçu sous la forme d'une fermeture à clip pouvant être actionnée manuellement.

10. Chevalet de support selon l'une des revendications précédentes, dans lequel le corps de base (1) est conçu de telle manière que, lorsque le corps de base (1) est bloqué sur le rail de montage (4) et la barre omnibus (6) est logée dans le dispositif de réception (2), une liaison électrique est établie entre le rail de montage (4) et la barre omnibus (6).
